# EUROPÄISCHE PATENTANMELDUNG

(11) **EP 0 977 124 A2**
(43) Veröffentlichungstag der Anmeldung: **02.02.2000**
(21) Anmeldenummer: 99113047.7
(22) Anmeldetag: 05.07.1999
(51) Int. Cl.: G06F 12/14

(54) **Verfahren und Anordnung zum Erkennen von unberechtigten Schreib- oder Lese-Zugriffen auf einen Speicherbereich**

(30) Priorität: 31.07.1998 DE 19834670
(71) Anmelder: SIEMENS AKTIENGESELLSCHAFT, 80333 München (DE)
(72) Erfinder: Walborn, Jochen, 17489 Greifswald (DE)

(57) **Zusammenfassung**

Bei einem Schreib- oder Lese-Zugriff auf einen Speicher (RAM) wird die aktuelle Zugriff-Speicheradresse (adr) mit gespeicherten Programm-Speicherbereichs-Adressen verglichen. Bei einem Auffinden wird der Lese-Zugriff auf den jeweiligen Programm-Speicherbereich (cb1...n) durchgeführt und zusätzlich zumindest eine zugeordnete Daten-Speicherbereichs-Adresse zwischengespeichert. Bei einem Nichtauffinden wird die Zugriff-Speicheradresse (adr) mit zuvor zwischengespeicherten Daten-Speicherbereichsadressen verglichen, wobei bei einem Auffinden der Schreib- oder Lese-Zugriff und bei einem Nichtauffinden kein Speicher-Zugriff erfolgt.

## Beschreibung

In der aktuellen Informationstechnologie kommt es insbesondere bei der Programmierung umfangreicher Softwareprojekte beim anschließenden Programmablauf beispielsweise zu unberechtigten Zugriffen auf Speicherbereiche eines in einem Mikroprozessorsystem angeordneten Speichers. Beispielsweise treten bei einer Nichtinitialisierung von während des Programmablaufes verwendeter Variablen - sofern diese als Speicheradressen interpretiert werden - fehlerhafte Lese- und Schreibzugriffe auf Bereiche des Speichers auf. Des Weiteren kann ein fehlerhaftes Beschreiben von Programmablaufinformationen enthaltenden Codebereichen des Speichers oder ein fehlerhaftes Beschreiben und Auswerten von im Speicher angeordneten Datenbäreichen zum Stillstand des aktuellen Programmablaufes oder Prozesses oder des gesamten Computersystems zur Folge haben. Einen Versuch zur Vermeidung fehlerhafter Speicherzugriffe stellt die in der aktuellen Softwareentwicklung eingesetzte Unterteilung der Software in separate Module bzw. der objektorientierte Ansatz beim Programmentwurf dar. Dabei werden themenbezogene Code- und Datenabschnitte bzw. -bereiche jeweils in einem Modul zusammengefaßt, wobei der in einem Modul definierte Datenabschnitt beispielsweise nur von der entsprechenden, dem Modul zugewiesenen Codesequenz ausgewertet und editiert werden darf. Diese Unterteilung von Software in objektorientierte Module wird durch geeignete, höherwertige Programmiersprachen - beispielsweise C++ - unterstützt. Jedoch kann auch mit den genannten, aktuellen Programmiermitteln eine fehlerhafte Initialisierung von Adreßvariablen - auch als Pointer bzw. Zeiger bezeichnet - nicht vermieden werden. Deshalb stellt die Modularisierung von Software nur eine Unterstützung zur beabsichtigten, fehlerfreien Programmierung von Software dar; sie gewährleistet jedoch keinen vollwertigen Schutz gegen fehlerhafte Reaktionen während der Programmausführung. Die Gefahr von fehlerhaften Speicherzugriffen sei an einem Beispiel kurz verdeutlicht. Ein Softwaremodul A greift beispielsweise schreibend auf den Code- oder Datenbereich eines Moduls B zu. Das Modul B reagiert daraufhin fehlerhaft, so daß der Fehler zunächst im Modul B vermutet und gesucht wird. Nach außen tritt der Fehler scheinbar unregelmäßig auf, da dieser mit dem Systemverhalten des Moduls B in Verbindung gebracht wird. Der eigentliche Fehler wird jedoch durch den falschen Schreibzugriff des Moduls A auf den Codebereich des Moduls B verursacht, wodurch der Fehler nur schwer und mit großem Aufwand ermittelt werden kann.

Aktuelle Rechnerarchitekturen mit virtuellen, eine Speicherhierarchie aufweisenden Speichern weisen zusätzlich ein dem Mikroprozessor zuzuordnendes Speicheransteuerungswerk - auch als Memory Management Unit MMU bezeichnet - auf, in welcher insbesondere Funktionen zur Adressierung des Hauptspeichers und Speicherschutzfunktionen realisiert sind. Mit Hilfe des Speicheransteuerungswerk wird dabei die Adreßumsetzung für Seiten- und/oder Segmentadressierung durch Bereitstellung entsprechender Tabellen unterstützt. Zur Beschleunigung des Zugriffs auf diese Tabellen wird jeweils ein aktueller Ausschnitt aus diesen Tabellen in speziellen, assoziativ organisierten Pufferspeichern für die Adreßumsetzung in den Speicheransteuerungswerken zwischengespeichert. Im Zusammenhang mit dem Speicherzugriff ist für die Realisierung von Schutzmaßnahmen eine Überprüfung der Zugriffsrechte, eine Adreßgrenzenprüfung usw. vorzunehmen, wofür teilweise spezielle und zum Teil kostenintensive Hardware - beispielsweise Komparatoren - eingesetzt werden.

Der Erfindung liegt die Aufgabe zugrunde, programm- bzw. prozeßgesteuerte, fehlerhafte Schreib- oder Lese-Zugriffe auf Speicherbereiche eines in einem Mikroprozessorsystem angeordneten Speichers zu erkennen und zu vermeiden. Insbesondere sollen fehlerhafte bzw. unberechtigte Zugriffe auf Speicherbereiche eines in einem Mikroprozessorsystem ohne Speicheransteuerungswerk - Memory Management Unit, MMU - angeordneten Speichers vermieden werden. Die Aufgabe wird durch die Merkmale des Patentanspruchs 1 gelöst.

Der wesentliche Aspekt des erfindungsgemäßen Verfahrens zum Erkennen von unberechtigten Schreib- oder Lese-Zugriffen auf einen Speicherbereich zumindest eines in einem Mikroprozessorsystem angeordneten Speichers besteht darin, daß der Speicher in zumindest einen durch zumindest eine erste Speicheradresse definierten Programm-Speicherbereich für Lese-Zugriffe und in zumindest einen durch zumindest eine zweite Speicheradresse definierten Daten-Speicherbereich für Schreib- und Lese-Zugriffe konfiguriert ist, wobei zumindest ein Daten-Speicherbereich zumindest einem Programm-Speicherbereich zuordenbar ist. Die Speicheradressen der aktuellen Speicherkonfiguration werden im Mikroprozessorsystem gespeichert. Bei einem Schreib- oder Lese-Zugriff auf zumindest einen Speicherbereich wird die aktuelle Zugriff-Speicheradresse in den gespeicherten ersten Speicheradressen der Programm-Speicherbereiche gesucht, wobei bei einem Auffinden der aktuellen Zugriff-Speicheradresse der Schreib-Zugriff mit der aktuellen Zugriff-Speicheradresse auf den jeweiligen Programm-Speicherbereich nicht durchgeführt wird und der Lese-Zugriff mit der aktuellen Zugriff-Speicheradresse auf den jeweiligen Programm-Speicherbereich durchgeführt wird. Zusätzlich wird die zumindest eine zweite Speicheradresse des zumindest einen dem jeweiligen Programm-Speicherbereich zugeordneten Daten-Speicherbereiches im Mikroprozessorsystem zwischengespeichert. Bei einem Nichtauffinden der aktuellen Zugriff-Speicheradresse wird die aktuelle Zugriff-Speicheradresse in der zumindest einen zwischengespeicherten zweiten Speicheradresse gesucht, wobei bei einem Auffinden der aktuellen Zugriff-Speicheradresse der Schreib- oder Lese-Zugriff mit der aktuellen Zugriff-Speicheradresse auf den jeweiligen Daten-Speicherbereich durchgeführt wird. Bei einem Nichtauffinden der aktuellen Zugriff-Speicheradresse in der zumindest einen zwischengespeicherten zweiten Speicheradresse wird kein Zugriff auf den Speicher durchgeführt.

Der wesentliche Vorteil des erfindungsgemäßen Verfahrens besteht darin, daß durch das Speichern von zulässigen Speicheradressen ein Erkennen von fehlerhaften Schreib- und/oder Lesezugriffen auf Speicherbereiche eines in einem Mikroprozessorsystem angeordneten Speichers mit geringem technischen und wirtschaftlichen Aufwand realisierbar ist. Das erfindungsgemäße Verfahren ist in jedem Mikroprozessorsystem einsetzbar, insbesondere bei Verwendung von Mikroprozessoren bzw. Mikrocontrollern ohne Speicheransteuerungswerk bzw. Memory Management Unit, MMU. Vorteilhaft erfolgt das Erkennen von fehlerhaften Schreib- und Lesezugriffen unabhängig von der Art des im Mikroprozessorsystem eingesetzten Mikroprozessors sowie unabhängig von den den Mikroprozessor steuernden Programmen.

Vorteilhaft wird bei einem Schreib-Zugriff auf zumindest einem Speicherbereich die aktuelle Zugriff-Speicheradresse in der zumindest einen zwischengespeicherten zweiten Speicheradresse gesucht - Anspruch 2. Bei Feststellen eines Schreib-Zugriffes auf den Speicher wird vorteilhaft auf die Suche der aktuellen Zugriff-Speicheradresse in den ersten Speicheradressen der Programm-Speicherbereiche verzichtet, da Schreib-Zugriffe nur auf die definierten Daten-Speicherbereiche und nicht auf die definierten Programm-Speicherbereiche des Speichers durchführbar sind. Durch das Einschränken des Suchbereiches bei Schreibzugriffen wird die Ablaufgeschwindigkeit des erfindungsgemäßen Verfahrens beschleunigt.

Gemäß einer vorteilhaften Ausgestaltung wird jeweils ein Programm-Speicherbereich und der zumindest eine zuordenbare Daten-Speicherbereich in einem Tabelleneintrag einer im Mikroprozessorsystem angeordneten Tabelle gespeichert - Anspruch 3. Durch das Abspeichern der aktuellen Speicherkonfiguration in Form einer Tabelle wird eine besonders einfache Realisierbarkeit und eine besonders schnelle Ausführungsgeschwindigkeit des erfindungsgemäßen Verfahrens erreicht.

Vorteilhaft ist ein Programm- oder Daten-Speicherbereich durch zwei jeweils den Beginn und das Ende des jeweiligen Speicherbereiches angebende Speicheradressen definiert - Anspruch 4. Durch das Angeben und Abspeichern jeweils den Beginn und das Ende von Speicherbereichen angebenden Speicheradressen wird der für die Durchführung des erfindungsgemäßen Verfahrens erforderliche Speicherbedarf weiter minimiert und somit der technische und wirtschaftliche Aufwand zur Durchführung des Verfahrens weiter reduziert.

Gemäß einer weiteren vorteilhaften Ausgestaltung sind die Speicheradressen der gespeicherten Speicherkonfiguration rekonfigurierbar. Desweiteren kann zumindest ein weiterer Programm- und/oder Daten-Speicherbereich der aktuellen Speicherkonfiguration hinzugefügt oder aus dieser entfernt werden - Anspruch 8. Durch diese vorteilhafte Ausgestaltung kann die gespeicherte Speicherkonfiguration jederzeit an die aktuelle bzw. an verschiedene Arbeitsumgebungen bzw. Arbeitssituationen angepaßt werden - beispielsweise Konfigurierung des Speicher bei Ausführung eines Kaltstarts bzw. Bootvorgangs oder bei Ausführung eines normalen Programmoduls.

Weitere vorteilhafte Ausgestaltungen des erfindungsgemäßen Verfahrens sowie eine Anordnung zur Durchführung des erfindungsgemäßen Verfahrens sind den weiteren Ansprüchen zu entnehmen.

Im folgenden wird ein Ausführungsbeispiel des erfindungsgemäßen Verfahrens anhand dreier Figuren näher erläutert. Dabei zeigen:
- FIG 1: eine mikroprozessorgesteuerte Schaltungsanordnung mit einer zugeordneten Speicherschutz-Vorrichtung zum fehlerfreien Beschreiben und Auslesen von Speicherbereichen eines im Mikroprozessorsystem angeordneten Speichers,
- FIG 2: den Aufbau der erfindungsgemäßen Speicherschutz-Vorrichtung zur Erkennung und Vermeidung von fehlerhaften Schreib-/Lesezugriffen auf die Speicherbereiche des Speichers, und
- FIG 3: beispielhaft einen Tabelleneintrag einer in der Speicherschutz-Vorrichtung angeordneten Tabelle, durch welche gültige Speicherbereiche des Speichers definiert sind.

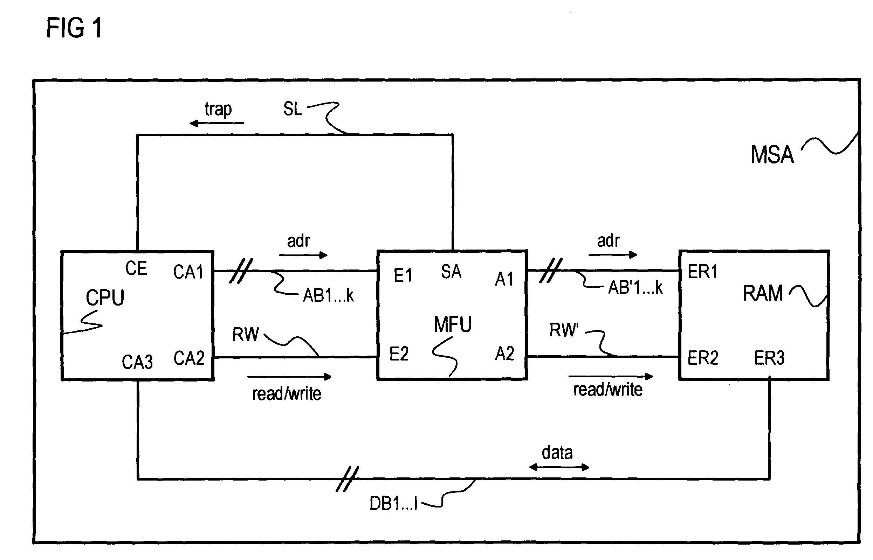

In FIG 1 ist mit Hilfe eines Blockschaltbildes ein Anordnungsbeispiel einer mikroprozessorgesteuerten Schaltungsanordnung MSA dargestellt. Die Schaltungsanordnung MSA weist einen Mikroprozessor CPU auf, welcher über einen ersten Ausgang CA1 und über einen Adreßbus ALB1...k mit einem ersten Eingang E1 einer Speicherschutz-Vorrichtung MFU verbunden ist. Der Adreßbus AB1...k weist beispielsweise eine Wortbreite von k-bit auf. Über einen zweiten Ausgang CA2 ist der Mikroprozessor CPU über eine Schreib-/Leseleitung RW an einen zweiten Eingang E2 der Speicherschutz-Vorrichtung MFU angeschlossen. Die Speicherschutz-Vorrichtung MFU ist über einen ersten Ausgang A1 und über einen weiteren Adreßbus AB'1...k - mit ebenfalls einer Wortbreite von k-bit - mit einem ersten Eingang ER1 eines Schreib-/Lese-Speichers RAM - beispielsweise einem flüchtigen Speicher - verbunden. Über einen zweiten Ausgang A2 ist die Speicherschutz-Vorrichtung MFU über eine weitere Schreib-/Leseleitung RW' an einen zweiten Eingang ER2 des flüchtigen Speichers RAM angeschlossen. Der flüchtige Speicher RAM ist über einen dritten Eingang ER3 und über einen Datenbus DB1...l - beispielsweise mit einer Wortbreite von l = 8 oder 16 oder 32 bit - mit einem dritten Ausgang CA3 des Mikroprozessors CPU verbunden. Über die Schreib-/Leseleitung RW bzw. über die weitere Schreib-/Leseleitung RW' wird ein den Zugriff auf den flüchtigen Speicher RAM steuerndes Schreib-/Lesesignal read/write vom Mikroprozessor CPU an die Speicherschutz-Vorrichtung MFU, bzw. von der Speicherschutz-Vorrichtung MFU an den flüchtigen Speicher RAM übermittelt. In Abhängigkeit vom dem am zweiten Eingang ER2 des flüchtigen Speichers RAM anliegenden Schreib-/Lesesignals read/write wird eine durch ein über den Adressbus AB1...k bzw. über den weiteren Adressbus AB'1...k an den ersten Eingang ER1 des flüchtigen Speichers RAM übermittelte Speicheradresse adr des flüchtigen Speichers RAM ausgelesen oder beschrieben. Dabei werden bei einem einen Lesebefehl repräsentierenden Schreib-/Lesesignal read/write die ausgelesenen Informationen data über den Datenbus DB1...l an den Mikroprozessor CPU übermittelt und bei einem einen Schreibbefehl repräsentierenden Schreib-/Lesesignal read/write zu speichernde Informationen data vom Mikroproprozessor CPU über den Datenbus DB1...l an den flüchten Speicher RAM übermittelt und die Informationen data in dem durch die am ersten Eingang ER1 anliegende Speicheradresse adr bestimmten Speicherbereich des flüchtigen Speichers RAM gespeichert.

Weiterhin weist der Mikroprozessor CPU einen Anschluß CE auf, welcher über eine Signalisierungsleitung SL mit einem Signalisierungsausgang SA der Speicherschutz-Vorrichtung MFU verbunden ist. Über die Signalisierungsleitung SL wird bei Erkennen eines fehlerhaften Schreib-/Lesezugriffes des Mikroprozessors CPU auf den flüchtigen Speicher RAM ein eine Fehlermeldung repräsentierendes Fehlersignal trap - beispielsweise ein Interrupt-Signal - von der Speicherschutz-Vorrichtung MFU an den Mikroprozessor CPU übermittelt.

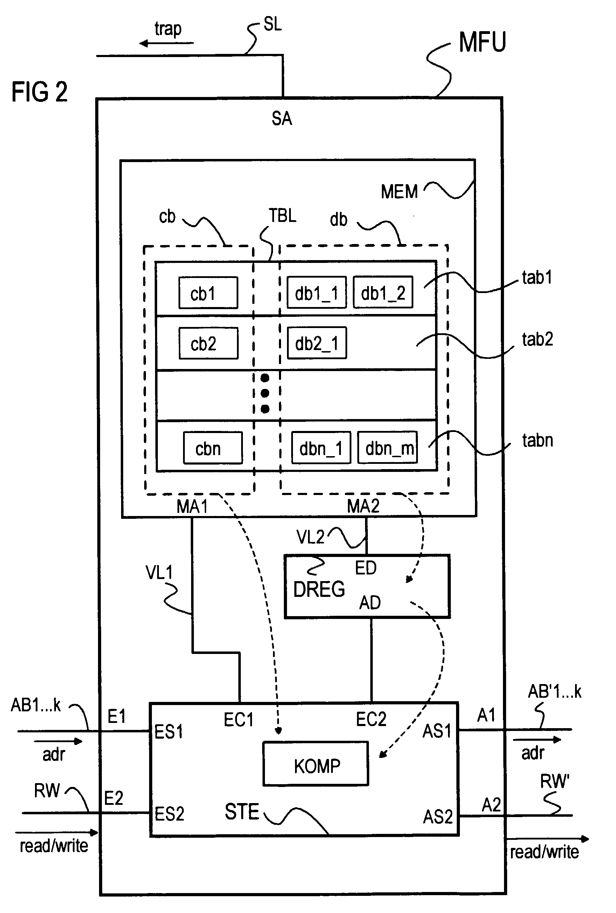

In FIG 2 ist ein beispielhafter Aufbau der Speicherschutz-Vorrichtung MFU in einem Blockschaltbild detailliert dargestellt. Das Blockschaltbild zeigt die Speicherschutz-Vorrichtung MFU, welche über den ersten Eingang E1 mit den Adressbus AB1...k und über den zweiten Eingang E2 an die Schreib-/Leseleitung RW angeschlossen ist. In der Speicherschutz-Vorrichtung MFU ist eine Steuereinheit STE angeordnet, welche über einen ersten Eingang ES1 mit den ersten Eingang E1 der Speicherschutz-Vorrichtung MFU verbunden ist. Des Weiteren ist die Steuereinheit STE über einen zweiten Eingang ES2 mit dem zweiten Eingang E2 der Speicherschutz-Vorrichtung MFU verbunden. Über einen ersten Ausgang AS1 ist die Steuereinheit STE an den ersten Ausgang A1 und über einen zweiten Ausgang AS2 an den zweiten Ausgang A2 der Speicherschutz-Vorrichtung MFU angeschlossen. Wie bereits beschrieben, ist an den ersten Ausgang A1 der Speicherschutz-Vorrichtung MFU der weitere Adreßbus AB'1...k und an den zweiten Ausgang A2 der Speicherschutz-Vorrichtung MFU die weitere Schreib-/Leseleitung RW' herangeführt. Weiterhin weist die Speicherschutz-Vorrichtung MFU einen Speicher MEM auf, in welchem mehrere Tabelleneinträge tab1...n einer Tabelle TBL gespeichert sind. Der Speicher MEM ist über einen ersten Ausgang MA1 und über eine erste Verbindungsleitung VL1 mit einem ersten Dateneingang EC1 der Steuereinrichtung STE verbunden. Über einen zweiten Ausgang MA2 ist der Speicher MEM über eine zweite Verbindungsleitung VL2 mit einem Eingang ED eines Datenregisters DREG verbunden, welches über einen Ausgang AD an einen zweiten Dateneingang EC2 der Steuereinrichtung STE angeschlossen ist. Die Steuereinrichtung STE weist weiterhin einen Komparator KOMP zum Vergleichen von an den Eingängen ES1, ES2, EC1, EC2 der Steuereinrichtung STE anliegenden Datenworten bzw. Speicheradressen adr, read/write auf.

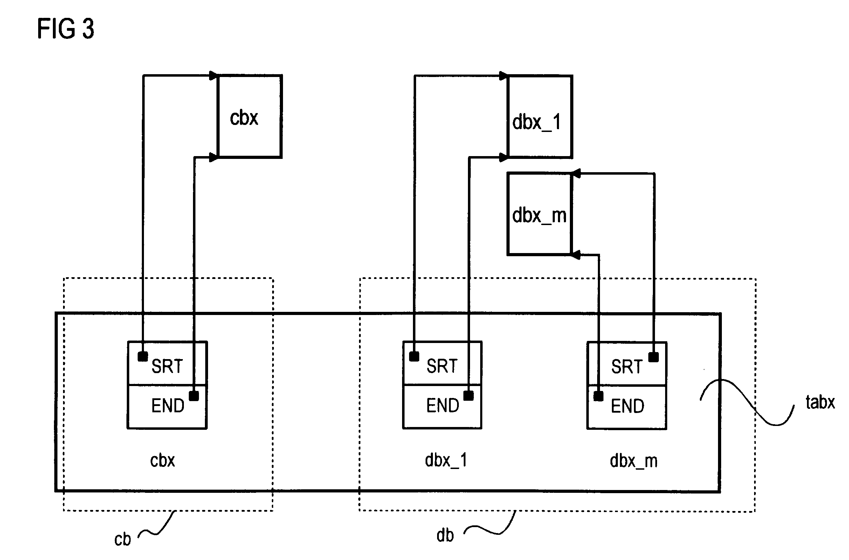

In FIG 3 ist beispielhaft ein Adreßeintrag tabx der Tabelle TBL genauer dargestellt. Mit Hilfe des Tabelleneintrages tabx ist jeweils ein zusammenhängender Codebereich cbx des Speichers RAM definiert, d.h. der in einem Tabelleneintrag tabx gespeicherte Codebereich cbx repräsentiert einen Speicherbereich des flüchtigen Speichers RAM, in welchem von dem Mikroprozessor CPU ausführbare Befehlszeilen eines Prozesses bzw. eines Programm- oder Softwaremoduls gespeichert sind.

Jedem Codebereich cbx ist zumindest ein Datenbereich dbx_1...dbx...m zugeordnet, durch welchen derjenige Speicherbereich des flüchtigen Speichers RAM definiert ist, auf den durch den mit Hilfe des Codebereiches cbx definierten Prozeß zugegriffen werden darf. Es sei angemerkt, daß ein bereits definierter Codebereich cbx zusätzlich auch als Datenbereich dbx_1...dbx_m definiert werden kann, welcher beispielsweise als beschreibbarer Datenbereich einem weiteren Codebereich cb1...n zuordenbar ist. Durch diese erfindungsgemäße Art der Speicherkonfiguration wird z.B. einem ersten Softwaremodul der kontrollierte Schreib-Zugriff auf den Codebereich eines zweiten Sofwaremoduls ermöglicht.

In FIG 2 und FIG 3 sind die in den einzelnen Tabelleneinträgen tab1...n gespeicherten Code- und Datenbereiche cb1...n, db1_1...dbn_m durch strichlierte Rechtecke cb, db hervorgehoben. Jeder Tabelleneintrag tab1...n repräsentiert mehrere Doppelregister, wobei in jedem Doppelregister in einer Hälfte die Startadresse SRT und in der anderen Hälfte die Endadresse END eines Speicherbereiches - Code- oder Datenbereich cb1...n, db1_1...dbn_m - des Speichers RAM speicherbar ist. Ein Speicherbereich kann eine oder mehrere Speicherzellen des Speichers RAM umfassen, wobei bei einem nur eine Speicherzelle umfassenden Speicherbereich, die im Doppelregister zu speichernde Start- und Endadresse SRT,END identisch ist.

Im folgenden wird ein Schreib-/Lesezugriff des Mikroprozessor CPU auf den flüchtigen Speicher RAM des Mikroprozessorsystems MSA über den Adreßbus AB1...k bzw. weiteren Adreßbus AB'1...k sowie die Überprüfung der zu beschreibenden bzw. auszulesenden Speicheradresse adr durch die erfindungsgemäße Speicherschutz-Vorrichtung MFU beispielhaft erläutert.

Bei einem Speicherzugriff des Mikroprozessor CPU auf den flüchtigen Speicher RAM wird ein entsprechendes Schreib-/Lesesignal read/write über die Schreib-/Leseleitung RW an die Speicherschutz-Vorrichtung MFU übermittelt. Mit dem Anliegen der ersten Flanke des Schreib-/Lesesignals read/write am zweiten Eingang E2 der Speicherschutz-Vorrichtung MFU wird durch den Komparator KOMP die am ersten Eingang E1 der Speicherschutz-Vorrichtung MFU anliegende Speicheradresse adr mit den in der Tabelle TBL gespeicherten Codebereichen cb1...n verglichen. Bei Feststellen einer Übereinstimmung der am Eingang E1 bzw. ES1 anliegenden Speicheradresse mit einem in der Tabelle TBL gespeicherten Codebereich cb1...n, d.h. liegt der durch die Speicheradresse adr bestimmte Speicherbereich innerhalb eines durch die Codebereiche cb1...n definierten Speicherbereiches, wird die Gültigkeit der am Eingang E1 bzw. ES1 anliegenden Speicheradresse adr festgestellt und die Speicheradresse adr durch die Steuereinheit STE freigegeben, d.h. die am ersten Eingang E1 bzw. ES1 anliegende Speicheradresse adr wird an den ersten Ausgang AS1 bzw. A1 der Speicherschutz-Vorrichtung MFU durchgeschaltet. Gleichzeitig wird das am zweiten Eingang E2 bzw. ES2 anliegende Schreib-/Lesesignals read/write auf den zweiten Ausgang AS2 bzw. A2 der Speicherschutz-Vorrichtung MFU durchgeschaltet und somit ein ordnungsgemäßer Zugriff des Mikroprozessor CPU auf einen gültigen Speicherbereich des flüchtigen Speichers RAM durchgeführt. Gleichzeitig wird bei Übereinstimmung der zu überprüfenden Speicheradresse mit einem in der Tabelle TBL gespeicherten Codebereich cb1...n - beispielhaft sei angenommen, daß die am Eingang E1 anliegende Speicheradresse adr innerhalb des mit Hilfe des ersten Tabelleneintrages tab1 definierten ersten Codebereiches cb1 angeordnet ist -, die entsprechenden, den ersten Codebereich cb1 zugeordneten Datenbereiche - hier die mit Hilfe des ersten Tabelleneintrages tab1 definierten Datenbereiche db1_1 und db1_2 - in das in der Speicherschutz-Vorrichtung MFU angeordnete Datenregister DREG übermittelt und diesem zwischengespeichert.

Liegt die beim nachfolgenden Speicherzugriff zu überprüfende Speicheradresse adr in keinem der in der Tabelle TBL gespeicherten Codebereiche cb1...n wird die am Eingang E1 bzw. ES1 anliegende Speicheradresse adr mit den im Datenregister DREG zwischengespeicherten Datenbereichen eines im vorherigen Überprüfungsschritt selektierten Tabelleneintrages tab1...n verglichen - z.B. mit den genannten Datenbereichen db1_1 und db1_2 des im vorherigen Überprüfungsschritt selektierten ersten Tabelleneintrages tab1. Liegt die zu überprüfende Speicheradresse adr ebenfalls außerhalb der im Datenregister DREG zwischengespeicherten Datenbereiche - hier db1_1, db1_2 - wird ein fehlerhafter, bzw. ungültiger Zugriff auf den flüchtigen Speicher RAM festgestellt und ein entsprechendes Fehlersignal trap durch die Steuereinheit STE generiert und über den Ausgang SA und die Signalisierungsleitung SL an den Mikroprozessor CPU übermittelt. Liegt die zu überprüfende Speicheradresse adr innerhalb eines der im Datenregister DREG zwischengespeicherten Datenbereiche - hier db1_1, db1_2 -, wird ein gültiger Zugriff auf den flüchtigen Speicher RAM festgestellt und die am ersten Eingang E1 bzw. ES1 anliegende Speicheradresse adr an den ersten Ausgang AS1 bzw. A1 der Speicherschutz-Vorrichtung MFU durchgeschaltet sowie das am zweiten Eingang E2 bzw. ES2 anliegende Schreib-/Lesesignal read/write über den zweiten Ausgang AS2 bzw. A2 and den flüchtigen Speicher RAM übermittelt.

Vorteilhaft wird per Voreinstellung bei einer Initialisierung des Mikroprozessorsystems MSA, d.h. bei einem Booten oder Kaltstart des Systems, immer der erste Tabelleneintrag tab1 bzw. der erste Codebereich cb1 der Tabelle TBL ausgewählt. In diesem Fall weist sowohl der erste Codebereich cb1 als auch der bzw. die dem ersten Codebereich cb1 zugeordneten Datenbereiche als Startadresse SRT den hexadezimalen Wert 0x0 und als Endadresse END den Hexadezimalwert 0xFFF... auf. Somit kann bei einer Initialisierung des Mikroprozessorsystems MSA die erste aktive Codesequenz eines ersten auszuführenden Prozesses unabhängig von ihrer Anordnung im flüchtigen Speicher RAM auf den gesamten Speicherbereich des flüchtigen Speichers RAM zugreifen. Anschließend kann durch die erste aktive Codesequenz eine Bereichseinschränkung des der ersten Codesequenz zugeordneten Codebereichs cb1 erfolgen; beispielsweise weist nach der Initialisierung des Mikroprozessorsystems MSA, d.h. nach der Ausführung der ersten Codesequenz, der erste Codebereich cb1 des ersten Tabelleneintrages tab1 die Startadresse 0x200 und die Endadresse 0x1000 auf. Damit können Codesequenzen eines aktuell ablaufenden Prozesses, welche außerhalb des durch den ersten Codebereich cb1 definierten Speicherbereiches liegen, nicht mehr auf den vollen Speicherbereich des flüchtigen Speichers RAM zugreifen.

Weiterhin kann durch die erste Codesequenz beispielsweise die Programmierung der weiteren in den einzelnen Tabelleneinträgen tab2...n gespeicherten Codebereiche cb2...n und der den Codebereichen cb2...n zugeordneten Datenbereiche db2_1..dbn_m erfolgen. Um ein ordnungsgemäßes Überprüfen von auszulesenden oder zu beschreibenden Speicherbereichen durch die erfindungsgemäße Speicherschutz-Vorrichtung MFU zu gewährleisten, d.h. eine eindeutige Zuordnung von Datenbereichen db1_1...dbn_m zu einem oder mehreren Codebereichen cb1...n zu erreichen, dürfen die in den einzelnen Tabelleneinträgen tab1...n gespeicherten Codebereiche cb1...n keine Überlappungen aufweisen. Dagegen sind bei den in unterschiedlichen Tabelleneinträgen tab1...n der Tabelle TAB gespeicherten Datenbereichen db1_1...dbn_m Überlappungen möglich.

Gemäß einer Ausgestaltungsvariante ist die Speicherschutz-Vorrichtung MFU in einen eine "Chip-Select-Leitung" und einen Datenbus aufweisenden Baustein integriert, wobei die Speicherregister des Bausteins ähnlich wie bei einem flüchtigen Speicher RAM auslesbar und beschreibbar sind, d.h. die Speicherschutz-Vorrichtung MFU weist "memory-mapped"-Eigenschaften auf. Um einen ordnungsgemäßen und sinnvollen Einsatz einer derart ausgestalteten Speicherschutz-Vorrichtung MFU zu gewährleisten, sollte zumindest eine Codesequenz berechtigt sein, auf den Adressbereich der Speicherschutz-Vorrichtung MFU zuzugreifen.

Alternativ kann mit Hilfe eines seriellen Busses ein Zugriff auf die Speicherregister der Speicherschutz-Vorrichtung MFU erfolgen.

## Patentansprüche

1. Verfahren zum Erkennen von unberechtigten Schreib- oder Lese-Zugriffen auf einen Speicherbereich zumindest eines in einem Mikroprozessorsystem (MSA) angeordneten Speichers (RAM),
- bei dem der Speicher (RAM) in zumindest einen durch zumindest eine erste Speicheradresse definierten Programm-Speicherbereich (cb1...n) für Lese-Zugriffe und in zumindest einen durch zumindest eine zweite Speicheradresse definierten Daten-Speicherbereich (db1_1...dbn_m) für Schreib- und Lese-Zugriffe konfiguriert ist, wobei zumindest ein Daten-Speicherbereich (db1_1...dbn_m) zumindest einem Programm-Speicherbereich (cb1...n) zuordenbar ist,
- bei dem die Speicheradressen der aktuellen Speicherkonfiguration im Mikroprozessorsystem (MSA) gespeichert sind,
- bei dem bei einem Schreib- oder Lese-Zugriff auf zumindest einen Speicherbereich die aktuelle Zugriff-Speicheradresse (adr) in den gespeicherten ersten Speicheradressen der Programm-Speicherbereiche (cb1...n) gesucht wird,
- bei dem bei einem Auffinden der aktuellen Zugriff-Speicheradresse (adr)
-- der Schreib-Zugriff mit der aktuellen Zugriff-Speicheradresse (adr) auf den jeweiligen Programm-Speicherbereich (cb1...n) nicht durchgeführt wird,
-- der Lese-Zugriff mit der aktuellen Zugriff-Speicheradresse (adr) auf den jeweiligen Programm-Speicherbereich (cb1...n) durchgeführt wird, und
-- zusätzlich die zumindest eine zweite Speicheradresse des zumindest einen dem jeweiligen Programm-Speicherbereich (cb1...n) zugeordneten Daten-Speicherbereichs (db1_1...dbn_m) im Mikroprozessorsystem (MSA) zwischengespeichert wird,
- bei dem bei einem Nichtauffinden der aktuellen Zugriff-Speicheradresse (adr),
-- die aktuelle Zugriff-Speicheradresse (adr) in der zumindest einen zwischengespeicherten zweiten Speicheradresse gesucht wird,
-- bei dem bei einem Auffinden der aktuellen Zugriff-Speicheradresse (adr) der Schreib- oder Lese-Zugriff mit der aktuellen Zugriff-Speicheradresse (adr) auf den jeweiligen Daten-Speicherbereich (db1_1...dbn_m) durchgeführt wird, und
-- bei einem Nichtauffinden kein Zugriff auf den Speicher (RAM) durchgeführt wird.

2. Verfahren nach Anspruch 1,
**dadurch gekennzeichnet,**
daß bei einem Schreib-Zugriff auf zumindest einen Speicherbereich die aktuelle Zugriff-Speicheradresse (adr) in der zumindest einen zwischengespeicherten zweiten Speicheradresse gesucht wird.

3. Verfahren nach Anspruch 1 oder 2,
**dadurch gekennzeichnet,**
daß jeweils ein Programm-Speicherbereich (cb1...n) und der zumindest eine zuordenbare Daten-Speicherbereich (db1_1...dbn_m) in einem Tabelleneintrag (tab1...n) einer im Mikropropzessorsystem (MSA) angeordneten Tabelle (TAB) gespeichert ist.

4. Verfahren nach einem der vorherigen Ansprüche,
**dadurch gekennzeichnet,**
daß ein Programm- oder Daten-Speicherbereich (cb1...n, db1_1...dbn_m) durch zwei jeweils den Beginn und das Ende des jeweiligen Speicherbereiches angebende Speicheradressen (SRT, END) definiert ist.

5. Verfahren nach einem der vorherigen Ansprüche,
**dadurch gekennzeichnet,**
- daß ein Programm-Speicherbereich (cb1...n) einen nur lesbaren, Programmablaufinformationen umfassenden Speicherbereich des zumindest einen Speichers (RAM) repräsentiert, und
- daß ein Daten-Speicherbereich (db1_1...dbn_m) einen lesbaren und/oder beschreibbaren, Nutzdaten umfassenden Speicherbereich des zumindest einen Speichers (RAM) repräsentiert.

6. Verfahren nach einem der vorherigen Ansprüche,
**dadurch gekennzeichnet,**
daß durch zusätzliche im Mikroprozessorsystem (MSA) gespeicherte Parameter die Art des Zugriffs auf die Programm- und Daten-Speicherbereiche (cb,1...n, db1_1...dbn_m) bestimmt wird.

7. Verfahren nach einem der vorherigen Ansprüche,
**dadurch gekennzeichnet,**
daß bei Erkennen einer unberechtigten Zugriff-Speicheradresse (adr) eine entsprechende Information (trap) an einen im Mikroprozessorsystem (MSA) angeordneten Mikroprozessor (CPU) oder an eine im Mikroprozessorsystem (MSU) angeordnete Steuereinheit übermittelt wird.

8. Verfahren nach einem der vorherigen Ansprüche,
**dadurch gekennzeichnet,**
daß die Speicheradressen der gespeicherten Speicherkonfiguration rekonfigurierbar sind, und
daß zumindest ein weiterer Programm- und/oder Daten-Speicherbereich (cb1...n, db1_1dbn_m) der aktuellen Speicherkonfiguration hinzugefügt oder aus dieser entfernt werden kann.

9. Anordnung zur Durchführung des erfindungsgemäßen Verfahrens
**dadurch gekennzeichnet,**
- daß in einem zwischen einem Mikroprozessor (CPU) und zumindest einem Speicher (RAM) angeordneten Adressbus (AB1...k, AB'1...k) eine Speicherschutzvorrichtung (MFU) zum Erkennen von unberechtigten Schreib- oder Lese-Zugriffen auf einen Speicherbereich des zumindest einen Speichers (RAM) eingefügt ist,
- daß zusätzlich die Speicherschutzvorrichtung (MFU) in eine zwischen dem Mikroprozessor (CPU) und dem zumindest einem Speicher (RAM) angeordnete Signalisierungsleitung (RW, RW') zur Übermittlung von Schreib-/Leseinformationen (read/write) eingefügt ist,
- daß die Speicheradressen der aktuellen Speicherkonfiguration in der Speicherschutzvorrichtung (MFU) gespeichert sind, wobei der Speicher (RAM) in zumindest einen durch zumindest eine erste Speicheradresse definierten Programm-Speicherbereich (cb1...n) für Lese-Zugriffe und in zumindest einen durch zumindest eine zweite Speicheradresse definierten Daten-Speicherbereich (db1_1...dbn_m) für Schreib- und Lese-Zugriffe konfiguriert ist, und wobei zumindest ein Daten-Speicherbereich (db1_1...dbn_m) zumindest einem Programm-Speicherbereich (cb1...n) zuordenbar ist,
- daß eine Speicherschutz-Routine in der Speicherschutzvorrichtung (MFU) vorgesehen ist,
-- bei der bei einem Schreib- oder Lese-Zugriff auf zumindest einen Speicherbereich die aktuelle, am Adressbus (AB1...k, AB'1...k) anliegende Zugriff-Speicheradresse (adr) in den gespeicherten ersten Speicheradressen der Programm-Speicherbereiche (cb1...n) gesucht wird,
-- bei der bei einem Auffinden der aktuellen Zugriff-Speicheradresse (adr)
--- der Schreib-Zugriff mit der aktuellen Zugriff-Speicheradresse (adr) auf den jeweiligen Programm-Speicherbereich (cb1...n) nicht durchgeführt wird,
--- der Lese-Zugriff mit der aktuellen Zugriff-Speicheradresse (adr) auf den jeweiligen Programm-Speicherbereich (cb1...n) durchgeführt wird, und
--- zusätzlich die zumindest eine zweite Speicheradresse des zumindest einen dem jeweiligen Programm-Speicherbereich (cb1...n) zugeordneten Daten-Speicherbereichs (db1_1...dbn_m) in der Speicherschutzvorrichtung (MFU) zwischengespeichert wird,
-- bei der bei einem Nichtauffinden der aktuellen Zugriff-Speicheradresse (adr),
--- die aktuelle Zugriff-Speicheradresse (adr) in der zumindest einen zwischengespeicherten zweiten Speicheradresse gesucht wird,
--- bei der bei einem Auffinden der aktuellen Zugriff-Speicheradresse (adr) der Schreib- oder Lese-Zugriff mit der aktuellen Zugriff-Speicheradresse (adr) auf den jeweiligen Daten-Speicherbereich (db1_1...dbn_m) durchgeführt wird, und
--- bei einem Nichtauffinden kein Zugriff auf den Speicher (RAM) durchgeführt wird.
